# EUROPEAN PATENT APPLICATION

(11) **EP 4 797 112 A1**
(43) Date of publication of application: **26.08.2026**
(21) Application number: 24883975.5
(22) Date of filing: 25.06.2024
(51) Int. Cl.: G06F 16/22

(54) **DATA MANAGEMENT METHOD AND APPARATUS, AND DEVICE, STORAGE MEDIUM AND COMPUTER PROGRAM**

(30) Priority: 03.11.2023 CN 202311464440
(71) Applicant: HUAWEI TECHNOLOGIES CO., LTD., Shenzhen 518129 (CN)
(72) Inventor: LV, Yongjian, Shenzhen, Guangdong 518129 (CN); LI, Qiang, Shenzhen, Guangdong 518129 (CN); MA, Yangyang, Shenzhen, Guangdong 518129 (CN)
(74) Representative: Goddar, Heinz J.
(86) International application number: PCT/CN2024/101437
(87) International publication number: WO 2025/091965

(57) **Abstract**

A data management method and apparatus, a device, a storage medium, and a computer program are disclosed, and pertain to the field of database technologies. The method includes: receiving a data storage request for a first tuple, where the first tuple includes data of a plurality of fields (601); if first data meets an out-of-line storage condition, storing the first data in an out-of-line data table, where the first data is data of any one of the plurality of fields (602); obtaining a first storage address of the first data in the out-of-line data table (603); and storing the first storage address in the first tuple of a main data table (604). The main data table is directly associated with the out-of-line data table based on an out-of-line storage address of data. In a data management process, for a field in a tuple, data in the out-of-line data table may be directly managed based on the out-of-line storage address recorded in the main data table. This improves data management efficiency in a high-concurrency data management scenario.

## Description

This application claims priority to Chinese Patent Application No. 202311464440.8, filed on November 3, 2023 and entitled "DATA MANAGEMENT METHOD AND APPARATUS, DEVICE, STORAGE MEDIUM, AND COMPUTER PROGRAM", which is incorporated herein by reference in its entirety.

### TECHNICAL FIELD

This application relates to the field of database technologies, and in particular, to a data management method and apparatus, a device, a storage medium, and a computer program.

### BACKGROUND

In a database, a tuple refers to a record or a row of data in a main data table of the database. A tuple consists of a tuple header and attribute data. The tuple header is used to store some metadata such as visibility information and a bitmap. The attribute data includes data of a plurality of attributes. Each attribute may also be understood as a field. A size of data of an attribute in the plurality of attributes may exceed a threshold. The attribute may be referred to as a large field, and the data of the attribute may be referred to as large field data. However, the large field data cannot be directly stored in the main data table.

In a related technology, openGauss (an open-source relational database) provides a TOAST technique, to support storage of the large field data in the database. When a user stores data larger than 2 KB, the data may be used as the large field data. The TOAST technique may attempt to store the large field data in an out-of-line manner, that is, store the large field data in a TOAST table. When the large field data is stored in the out-of-line manner, a 32-bit unique identifier is first applied for the large field data as a chunk ID (Chunk ID). The chunk ID is an index value for indexing an out-of-line storage location, and the chunk ID is stored in a tuple to which the large field data belongs in the main data table. In addition, the chunk ID and an out-of-line storage address (namely, a physical location in the TOAST table) indicating the large field data are recorded in a TOAST index table. When the large field data stored in the out-of-line manner is accessed, the chunk ID corresponding to the large field data is first obtained from the main data table, and then the out-of-line storage address corresponding to the chunk ID is determined from the TOAST index table. In this way, the large field data is read from the TOAST table based on the out-of-line storage address.

However, the foregoing out-of-line storage manner depends on globally increasing chunk IDs. However, in a scenario with high concurrent data storage requests, it takes a long time to apply for a chunk ID of large field data stored in the out-of-line manner. In addition, in the TOAST technique, a maximum of 2³² identifier serial numbers can be used as chunk IDs. When a chunk ID is applied for, the 2³² identifier serial numbers may be rolled back. To be specific, after a (2³²)^{th} identifier serial number is obtained through application, application needs to be performed again from a 1^{st} identifier serial number, and the identifier serial number obtained through application is used as the chunk ID. Therefore, once the identifier serial number is rolled back, it takes a long time to apply for the chunk ID, which severely affects data storage performance.

### SUMMARY

This application provides a data management method and apparatus, a device, a storage medium, and a computer program, to improve data management efficiency. The following is the technical solutions.

According to a first aspect, a data management method is provided. The method includes:
receiving a data storage request for a first tuple, where the first tuple includes data of a plurality of fields; if first data meets an out-of-line storage condition, storing the first data in an out-of-line data table, where the first data is data of any one of the plurality of fields; obtaining a first storage address of the first data in the out-of-line data table; and storing the first storage address in the first tuple of a main data table.

It can be learned that, in this application, when the first tuple is stored in a database, if the first data in the first tuple meets the out-of-line storage condition, it is determined that the first data is large field data, the first data is stored in the out-of-line data table, and the data start address of the first data in the out-of-line data table is stored in the main data table. In this way, the main data table is directly associated with the out-of-line data table based on an out-of-line storage address of data. In a data management process, data stored in an out-of-line database may be directly managed based on the out-of-line storage address recorded in the main data table, so that data storage efficiency is improved in a high-concurrency data storage scenario.

Optionally, storing the first data in the out-of-line data table includes: performing slicing processing on the first data, to obtain at least one piece of slice data; and storing the at least one piece of slice data in the out-of-line data table.

Optionally, the at least one piece of slice data includes first slice data and second slice data that are sequentially connected, and storing the at least one piece of slice data in the out-of-line data table includes: storing the second slice data in a first physical area in the out-of-line data table; and storing the first slice data and a physical address of the first physical area in a second physical area in the out-of-line data table; and storing the first storage address in the first tuple of the main data table includes: storing a physical address of the second physical area in the first tuple of the main data table.

Optionally, the method further includes: receiving a data update request for the first tuple, where the data update request is used to request to update the first data based on second data; if the second data meets the out-of-line storage condition, storing the second data in the out-of-line data table, and obtaining a second storage address of the second data in the out-of-line data table; and updating the first storage address in the first tuple of the main data table to the second storage address.

Optionally, after the receiving a data update request for the first tuple, the method further includes: if the second data does not meet the out-of-line storage condition, updating the first tuple in the main data table based on the second data.

Optionally, after updating the first tuple in the main data table, the method further includes: deleting the first data from the out-of-line data table based on the first storage address.

It can be learned that, in this application, when the second data is used to update the first data in the first tuple in the database, if the second data meets the out-of-line storage condition, the second data is stored in the out-of-line data table, and the first storage address of the first data is updated in the main data table by using the out-of-line storage address of the second data. In this way, the main data table is directly associated with the out-of-line data table based on an out-of-line storage address of data. In a data management process, data stored in an out-of-line database may be directly managed based on the out-of-line storage address recorded in the main data table, so that data storage efficiency is improved in a high-concurrency data storage scenario.

Optionally, the method further includes: receiving a data query request for the first tuple, where the data query request is used to query data of a target field in the plurality of fields; if an out-of-line storage address of the target field is stored in the main data table, reading the data of the target field from the out-of-line data table based on the out-of-line storage address; and outputting a data query result of the first tuple based on the data of the target field.

Optionally, the data of the target field includes a plurality of pieces of slice data, and outputting the data query result of the first tuple based on the data of the target field includes: splicing the plurality of pieces of slice data based on a reading sequence of the plurality of pieces of slice data; and outputting the query result of the first tuple based on data after splicing.

It can be learned that, in this application, when the data of the first tuple is queried in the database, if the data of the target field is stored in the out-of-line data table, after the out-of-line storage address of the target field is obtained from the main data table, the data of the target field is read from the out-of-line data table based on the out-of-line storage address, and the data query result of the first tuple is output. In this way, the main data table is directly associated with the out-of-line data table based on an out-of-line storage address of data. In a data management process, data stored in an out-of-line database may be directly managed based on the out-of-line storage address recorded in the main data table, so that data storage efficiency is improved in a high-concurrency data storage scenario.

According to a second aspect, a data management apparatus is provided. The data management apparatus has a function of implementing behavior of the data management method in the first aspect. The data management apparatus includes at least one module, and the at least one module is configured to implement the data management method provided in the first aspect.

According to a third aspect, a computer device is provided. The computer device includes a processor and a memory, and the memory is configured to store a computer program for performing the data management method provided in the first aspect. The processor is configured to execute the computer program stored in the memory, to implement the data management method in the first aspect.

Optionally, the computer device may further include a communication bus, and the communication bus is configured to establish a connection between the processor and the memory.

According to a fourth aspect, a computer-readable storage medium is provided. The storage medium stores instructions, and when the instructions are run on a computer, the computer is enabled to perform the data management method in the first aspect.

According to a fifth aspect, a computer program product including instructions is provided. When the instructions are run on a computer, the computer is enabled to perform the data management method in the first aspect. In other words, a computer program is provided. When the computer program is run on a computer, the computer is enabled to perform steps of the data management method in the first aspect.

Technical effects achieved in the second aspect, the third aspect, the fourth aspect, and the fifth aspect are similar to technical effects achieved by the corresponding technical means in the first aspect. Details are not described herein again.

### BRIEF DESCRIPTION OF DRAWINGS

FIG. 1 is a diagram of a structure of a data table in a TOAST technique according to an embodiment of this application;
FIG. 2 is a schematic flowchart of data storage in a TOAST technique according to an embodiment of this application;
FIG. 3 is a diagram of a data management scenario according to an embodiment of this application;
FIG. 4 is a diagram of an architecture of a data management system according to an embodiment of this application;
FIG. 5 is a diagram of a structure of a compute node according to an embodiment of this application;
FIG. 6 is a schematic flowchart of a data management method according to an embodiment of this application;
FIG. 7 is a schematic flowchart of another data management method according to an embodiment of this application;
FIG. 8 is a schematic flowchart of still another data management method according to an embodiment of this application;
FIG. 9 is a diagram of a structure of a data table in an ENTOAST technique according to an embodiment of this application;
FIG. 10 is a flowchart of data storage in an ENTOAST technique according to an embodiment of this application;
FIG. 11 is a flowchart of data update in an ENTOAST technique according to an embodiment of this application;
FIG. 12 is a flowchart of data query in an ENTOAST technique according to an embodiment of this application; and
FIG. 13 is a diagram of a structure of a data management apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, before a data management method provided in embodiments of this application is described in detail, terms, related background, and implementation environments in embodiments of this application are first described.

First, the terms in embodiments of this application are described.

### 1. Database management system (database management system, DBMS)

A DBMS is large software that manipulates and manages databases, and is used to create, use, and maintain the databases. The DBMS manages and controls the databases in a unified manner, to ensure security and integrity of the databases. A user accesses data in the database through the DBMS. A database administrator also maintains the database through the DBMS. The DBMS may allow a plurality of applications and users to create, modify, and access the database simultaneously or at different moments in different methods. Most DBMSs provide a data definition language (data definition language, DDL), a data manipulation language (data manipulation language, DML), and a data query language (data query language, DQL) for users to define schema structures and permission constraints of the databases, and to perform operations such as adding and deleting data.

### 2. Tuple

Simply speaking, in a database, a tuple refers to a record or a row of data, and is a most basic data unit in the database.

A tuple is actually a series of bytes. How to interpret these bytes is related to a schema of the database. A DBMS translates these bytes into values of corresponding types based on definition of a table. The tuple consists of two parts: a tuple header and attribute data. The tuple header stores some metadata such as visibility information and a bitmap. A tuple data part generally stores specific data of each attribute in a sequence during table definition.

### 3. Page

In a database, a page refers to a contiguous block of physical storage space, typically 4 KB or 8 KB. A database management system uses pages to store data and indexes. Each page has a unique identifier, called a page ID.

The page is a most basic storage unit in the database. All the data and indexes are stored in pages. When the database needs to read or write the data, the database may load the pages to a memory for operations.

### 4. Tuple identifier (tuple ID, TID)

In an openGauss database, a TID is a special data type that indicates a physical location of a row. The TID consists of two parts: a page ID and a tuple ID.

### 5. Large field

In a database, a large field refers to a column that stores a large amount of data (a column can also be understood as an attribute or a field), and is usually binary data such as a text, an image, an audio, or a video. In the database, because a size of the large field exceeds that of a common data type, the large field usually requires special processing and storage manners.

### 6. Out-of-line storage

Out-of-line storage refers to storing some rows of data (namely, tuple data) in a database in an independent storage medium instead of storing the data in a main data table of a main database. This storage manner can reduce a load of the database, reduce a data access latency, and improve performance and scalability of the database.

The out-of-line storage is usually used to store a binary large object (binary large object, BLOB) or a character large object (character large object, CLOB), because data sizes of these objects may exceed a limit of a database management system.

### 7. Row chaining

Row chaining means that in a relational database, data of a tuple is sliced into a plurality of pieces of slice data in a fixed size, and the pieces of slice data are connected by using physical location or logical location information, so that complete data of the tuple can be obtained at a time during reading.

### 8. Data manipulation language (data manipulation language, DML)

A DML is used to perform operations on data in a database, including the operations such as adding, deleting, and modifying. Common DML statements include an insert (INSERT) statement, an update (UPDATE) statement, a delete (DELETE) statement, and the like.

### 9. Data query language (data query language, DQL)

A DQL is used to query data in a database, and may not modify the data. A common DQL statement is a select (SELECT) statement.

Then, the related background of embodiments of this application is described.

For a problem of storing large field data in a database, openGauss provides an oversized-attribute storage technique (the oversized-attribute storage technique, TOAST), to support storage of a large field in the database.

When a user stores large field data larger than 2 KB, the TOAST technique may attempt to store the large field data in an out-of-line manner, that is, store the large field data in a TOAST table. When the large field data is stored in the out-of-line manner, a 32-bit unique identifier is first applied for the large field data as a chunk ID (Chunk ID). The chunk ID is an index value for indexing an out-of-line storage location, and the chunk ID is stored in a tuple to which the large field data belongs in a main data table. In addition, the chunk ID and an out-of-line storage address (namely, a physical location in the TOAST table) indicating the large field data are recorded in a TOAST index table. When the large field data stored in the out-of-line manner is accessed, the chunk ID corresponding to the large field data is first obtained from the main data table, and then the out-of-line storage address corresponding to the chunk ID is determined from the TOAST index table. In this way, the large field data is read from the TOAST table based on the out-of-line storage address.

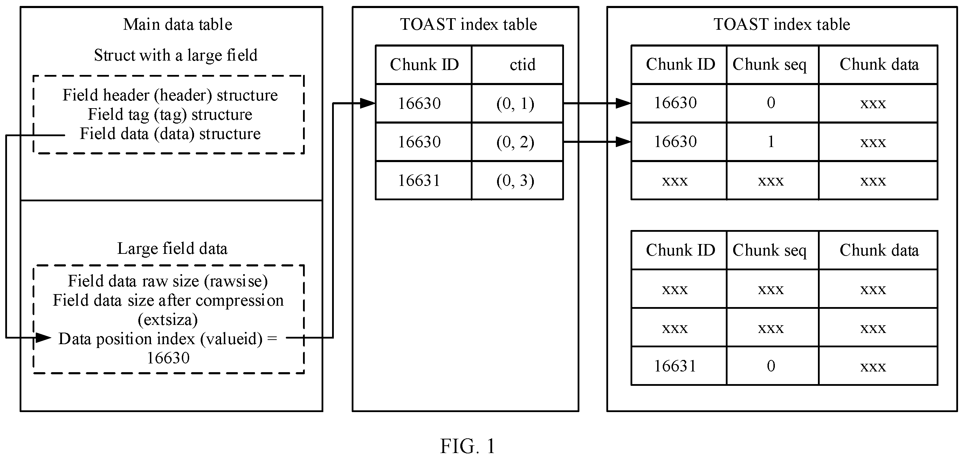

As shown in FIG. 1, for the large field data whose data size exceeds 2 KB, assuming that a value of a location index (namely, the chunk ID) stored in the main data table is 16630, it is determined, from the TOAST index table based on the chunk ID in the main data table, that the storage location (denoted as ctid) of the large field data in the TOAST table is (0, 1) and (0, 2). Based on the ctid value, slice data 0 corresponding to the large field data is read from a 1^{st} row of a page 0 in the TOAST table, and slice data 1 corresponding to the large field data is read from a 2^{nd} row of the page 0, to obtain complete large field data.

In the TOAST technique, the main data table is used to store visibility information of the tuple, and is used to perform visibility determining during data DML and DQL processing. In addition, the main data table further stores a chunk ID corresponding to at least one piece of large field data in the tuple. The TOAST index table is used to store a correspondence between a chunk ID and an out-of-line storage address of the large field data. The TOAST table is used to store the large field data.

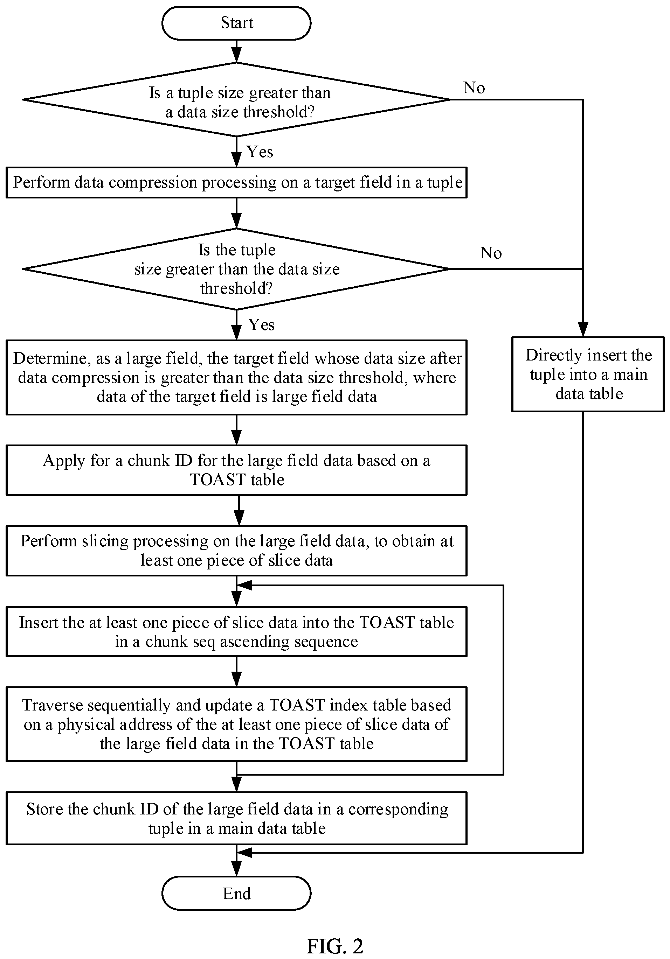

As shown in FIG. 2, implementing out-of-line storage of the large field data based on the TOAST technique includes the following steps.
(1) Determine whether a size of a tuple exceeds a threshold.
   If the size exceeds the threshold (for example, 2 KB), the following step (2) is performed; or if the size does not exceed the threshold, the tuple may be inserted into a main data table.
(2) Attempt to perform data compression processing on a target field in the tuple, and determine again whether a size of the tuple after data compression processing exceeds the threshold (for example, 2 KB).
   If the size exceeds the threshold, the following step (3) is performed; or if the size does not exceed the threshold, the tuple after compression processing is inserted into the main data table.
(3) If a data size of the target field after data compression processing still exceeds 2 KB, the target field is determined as large field data, and a unique identifier of a uint32 type is applied for each piece of large field data, that is, the identifier is used as a chunk ID of the large field data, to index an out-of-line storage location.
   Specifically, an implementation process of applying for the chunk ID for the large field data is as follows: Based on a TOAST index table, a global OID generation lock (OID lock for short) is first added to this identifier sequence number, and a current latest identifier is used as the chunk ID of the large field data through scanning. Then, the identifier sequence number is incremented by 1, and the OID lock is released. Next, to ensure uniqueness and validity of the chunk ID, it is necessary to check, in identifier sequence numbers, whether the currently applied chunk ID is duplicate. If the chunk ID is duplicate, a value of the chunk ID is incremented by 1 and application is performed again. If integer overflow occurs during application for the chunk ID, the application continues from a 1^{st} valid identifier. If no valid chunk ID is obtained through application, waiting is continued. If a valid chunk ID is obtained through application, step (4) is performed.
(4) The large field data is sliced in a fixed size, to obtain at least one piece of slice data, then traversing is performed in sequence, so that the at least one piece of slice data is inserted into a TOAST table, and a physical address of each piece of slice data is stored in a TOAST index table based on the chunk ID of the large field, to update the TOAST index table.
(5) The chunk ID of the large field data is inserted into the corresponding tuple in the main data table based on the TOAST index table after update, and an out-of-line storage procedure of the large field data in the tuple is ended.

However, during storing the large field data in a database based on the TOAST technique, at least one of the following problems exists.
(1) Out-of-line storage of the large field data depends on globally increasing identifier sequence numbers (namely, chunk IDs), and the chunk ID is used as a primary key index of the out-of-line storage address. As a result, in a high-concurrency scenario, a large quantity of conflicting operations may be introduced in operations such as applying for a chunk ID, validating validity of the chunk ID (that is, validating whether the applied chunk ID is duplicate in the identifier sequence numbers), concurrently inserting the chunk IDs into the TOAST index table in an ascending sequence, and validating uniqueness of an index value in the TOAST index table (that is, validating whether duplicate chunk IDs exist in the TOAST index table), and consequently, concurrent performance of out-of-line storage of the large field data deteriorates significantly.
(2) As a quantity of chunk IDs in the TOAST index table increases, time required for validating the uniqueness of the chunk ID increases, which causes a significant performance degradation.
(3) Because a total quantity of globally increasing identifier sequence numbers is 4 B, a maximum of 2³² identifier sequence numbers can exist simultaneously. To be specific, when a chunk ID is applied for, the 2³² identifier sequence numbers may be rolled back. After a (2³²)^{th} identifier sequence number is obtained through application, application needs to be performed again from a 1^{st} identifier sequence number, and the identifier obtained through application is used as the chunk ID. Therefore, once the identifier sequence number is rolled back, it needs to wait when applying for the chunk ID, which severely affects user services.
(4) Currently, a pointer used in the main data table to indicate the out-of-line storage location occupies 18 B. In the main data table, a size of a single row (that is, a single tuple) cannot exceed a page size (usually 8 KB). Therefore, a quantity of columns in a single tuple in the main data table (that is, a quantity of fields or a quantity of attributes included in the tuple) is limited to (page size-page metadata)/18 B≈440 columns. In other words, a maximum quantity of fields or a maximum quantity of attributes included in a tuple in the main data table are less than 450. As a result, extensibility of an attribute of the single tuple is poor.

Based on at least one of the foregoing problems, an embodiment of this application provides a data management method. An enhanced oversized-attribute storage technique (enhanced TOAST, ENTOAST for short) is used to implement operations such as out-of-line storage, update, and query of the large field data. In addition, the out-of-line storage address of the large field data is directly stored in the main data table of the database, so that the large field data is directly read from the out-of-line data table based on the out-of-line storage address. This resolves a problem caused when the chunk ID is introduced to manage the large field data, and improves data management efficiency.

The following describes an application scenario, a system architecture, and an implementation environment in embodiments of this application.

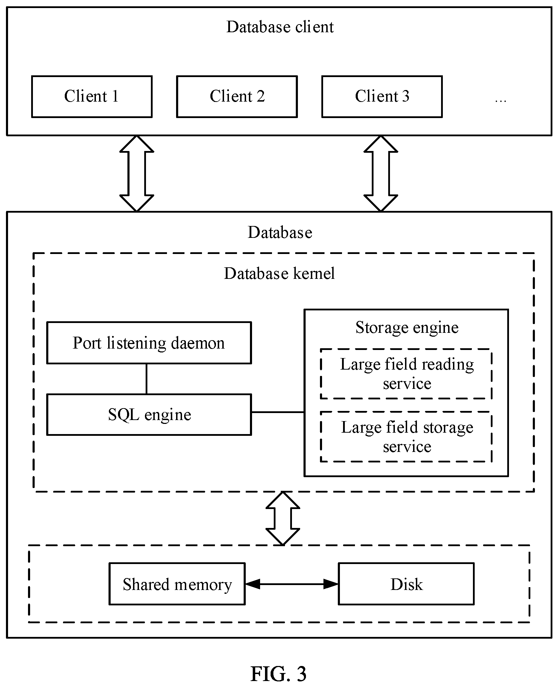

The database may be implemented by using one or more compute nodes. FIG. 3 is a diagram of a database-based data management scenario. A database client may include a plurality of clients, and all the plurality of clients may initiate a data management request to the database. For example, the database is deployed on a single data node. The database includes software modules such as a port listening daemon process, an SQL engine, and a storage engine in a data kernel, and hardware modules such as a shared memory and a disk. In addition, the storage engine is directly connected to the shared memory.

As an important part of a database management system, the storage engine mainly functions to manage data storage and retrieval. In this embodiment of this application, the storage engine may provide a large field storage service and a large field reading service, and the large field storage service and the large field reading service use a manner combining out-of-line storage and row chaining, to replace a conventional storage manner of a TOAST index table and a TOAST table.

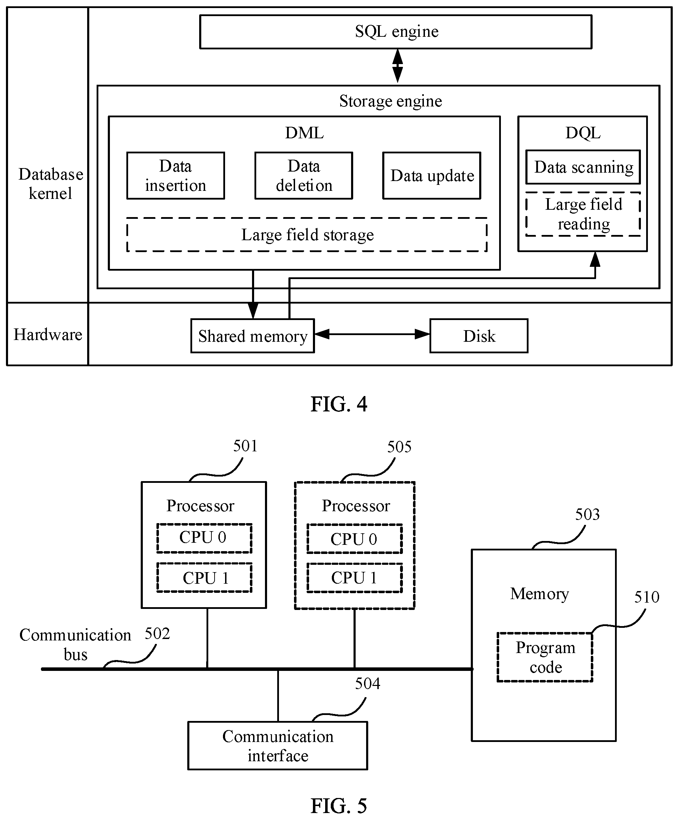

As shown in FIG. 4, when the data management method provided in this embodiment of this application is implemented, the SQL engine in the data kernel may process, into a data request that is based on a machine language that can be identified and executed by a machine, a data request that is based on a natural language and sent by a client. For example, in response to a data operation request initiated by the client, the SQL engine sends a data operation instruction (that is, a DML statement) to the storage engine, and the storage engine processes the requested large field data in the shared memory in response to this data storage instruction. In response to a data query request initiated by the client, the SQL engine sends a data query instruction (that is, a DQL statement) to the storage engine, and the storage engine reads the requested large field data from the shared memory in response to the data query instruction.

It should be understood that the shared memory may dump the stored data to the disk. A moment at which the data is dumped between the shared memory and the disk is not limited in embodiments of this application.

It should be noted that, FIG. 3 and FIG. 4 are merely examples in which the database is deployed on a single data node. In practice, the database may alternatively be deployed on a plurality of data nodes. Deployment manners of a software module and a hardware module in all the data nodes are the same. A quantity of data nodes on which the database is deployed is not limited in embodiments of this application.

Data management scenarios described in embodiments of this application are intended to describe technical solutions in embodiments of this application more clearly, and do not constitute a limitation on technical solutions provided in embodiments of this application. A person of ordinary skill in the art can know that technical solutions provided in embodiments of this application are also applicable to similar technical problems with emergence of new databases.

FIG. 5 is a diagram of a structure of a data node according to an embodiment of this application. The data node may be any computer device having a data read/write function, for example, a server. The data node includes at least one processor 501, a communication bus 502, a memory 503, and at least one communication interface 504.

The processor 501 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 502 is configured to transfer information between the foregoing components. The communication bus 502 may be classified into an address bus, a data bus, a control bus, and the like. For ease of indication, the bus is indicated by using only one bold line in FIG. 5. However, this does not indicate that there is only one bus or only one type of bus.

The memory 503 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory 503 is not limited thereto. The memory 503 may exist independently, and is connected to the processor 501 through the communication bus 502. Alternatively, the memory 503 may be integrated with the processor 501.

The communication interface 504 is configured to communicate with another device or a communication network by using any apparatus like a transceiver. The communication interface 504 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In an example, the processor 501 may include one or more CPUs, for example, a CPU 0 and a CPU 1 shown in FIG. 5.

In an example, the data node may include a plurality of processors, for example, the processor 501 and a processor 505 shown in FIG. 5. Each of the processors may be a single-core processor, or may be a multi-core processor. The processor herein may be one or more devices, circuits, and/or processing cores configured to process data (for example, computer program instructions).

In some embodiments, the data node may further include an output device and an input device. The output device communicates with the processor 501, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 501, and may receive a user input in a plurality of manners. For example, the input device may be a mouse, a keyboard, a touchscreen device, or a sensing device.

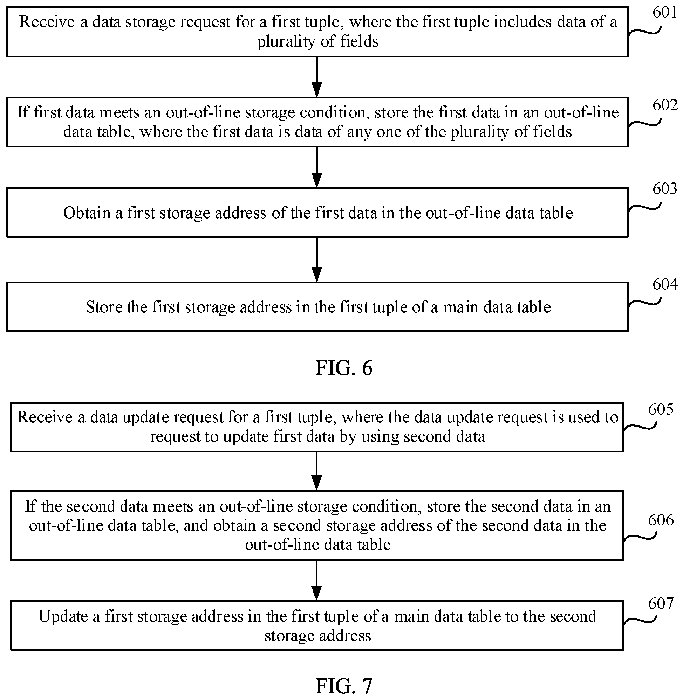

In some embodiments, the memory 503 is configured to store program code 510 for executing the solutions of this application, and the processor 501 may execute the program code 510 stored in the memory 503. The program code 510 may include one or more software modules. The data node may implement, by using the processor 501 and the program code 510 in the memory 503, the data management method provided in the following embodiment in FIG. 6.

The following describes in detail the data management method provided in embodiments of this application.

FIG. 6 is a flowchart of a data management method according to an embodiment of this application. The method may be applied to the foregoing data node. With reference to FIG. 6, the method includes the following steps.

Step 601: Receive a data storage request for a first tuple, where the first tuple includes data of a plurality of fields.

The first tuple is any tuple that is requested to be stored in a database. In the plurality of fields included in the first tuple, data sizes of some fields may exceed a data size threshold, or data sizes of some fields may not exceed a data size threshold. For data whose data size exceeds the data size threshold, the data is large field data, cannot be directly stored in a main data table of the database, and needs to be compressed or stored in an out-of-line manner.

The data size threshold may be set based on a page size of the main data table and/or a page size of an out-of-line data table. Because the tuple cannot be stored across pages, when the page size is 8 KB and four tuples are stored in one page, the data size threshold may be set to 2 KB. Certainly, in practice, the data size threshold may alternatively be set to another value, for example, 4 KB. This is not limited in this embodiment of this application.

In some embodiments, after the data request for the first tuple is received, whether the first tuple meets an out-of-line storage condition is first determined based on a tuple size of the first tuple. If the out-of-line storage condition is met, a part or all the fields of the first tuple are considered to be stored in the out-of-line manner. If the out-of-line storage condition is not met, the first tuple is directly stored in the main data table.

The tuple size refers to a total size of data of all fields in a tuple, that is, a total quantity of bytes. The out-of-line storage condition is that the data size is greater than the data size threshold.

Optionally, when the tuple size of the first tuple is greater than the data size threshold, that is, the out-of-line storage condition is met, data compression processing may be performed on large field data whose data size exceeds the data size threshold in the first tuple, and the tuple size of the first tuple is recalculated based on a data compression result. If the tuple size of the first tuple after data compression processing is greater than the data size threshold, the large field data in the first tuple is stored in the out-of-line manner. If the tuple size of the first tuple after data compression processing is less than or equal to the data size threshold, the large field data in the first tuple after compression processing is stored in the main data table.

In the plurality of fields of the first tuple, some fields support compression. Therefore, if the first tuple meets the out-of-line storage condition, data compression processing may be first performed on data in the field that supports compression in the first tuple. If the first tuple after data compression processing still meets the out-of-line storage condition, the large field data in the first tuple is stored in the out-of-line manner.

It should be noted that, in a process of determining, based on the tuple size of the first tuple, whether to perform out-of-line storage on the first tuple, if there is the large field data in the first tuple, the large field data may be directly stored in the out-of-line manner. To reduce a quantity of physical areas occupied by out-of-line storage of the large field data, data compression processing may be first performed on the large field data. Based on a data compression result, the data after compression processing may also be stored in the out-of-line data table.

To be specific, if the first tuple after compression processing meets the out-of-line storage condition, it indicates that a total size of data of a compressed field and data of a non-compressed field is greater than 2 KB. In this case, for the field after compression, the data size of the field may exceed 2 KB or may not exceed 2 KB. However, because the tuple size is greater than the data size threshold, the large field data in the first tuple after compression processing may be stored in the out-of-line manner.

In an example, it is assumed that the first tuple includes a field 1, a field 2, a field 3, a field 4, and a field 5, and the field 2, the field 3, the field 5, and the tuple size of the first tuple exceed the data size threshold. In this case, data of the field 2, the field 3, and the field 5 that support compression processing is first compressed. If after data compression processing, a data size of the field 2 is greater than the data size threshold, a data size of the field 3 and a data size of the field 5 are less than the data size threshold, and the tuple size of the first tuple is greater than the data size threshold, data of the field 2, the field 3, and the field 5 after compression processing is stored in the out-of-line manner. If after data compression processing, the data sizes of the field 2, the field 3, and the field 5 each are less than the data size threshold, the tuple size of the first tuple may be less than the data size threshold. Therefore, the first tuple may be stored in the main data table, where the field 1 and the field 4 store raw data, and the field 2, the field 3, and the field 5 store data after compression processing. Certainly, the data after compression processing stored in the field 2, the field 3, and the field 5 may alternatively be directly stored in the out-of-line manner.

Step 602: If first data meets the out-of-line storage condition, store the first data in the out-of-line data table, where the first data is data of any one of the plurality of fields.

In this embodiment of this application, the out-of-line data table is an ENTOAST table, and the out-of-line data table is used to store large field data that needs to be stored in the out-of-line manner in the main data table, and a correspondence between large field data and a physical address.

In other words, it is assumed that the first data is raw data whose data size is greater than the data size threshold, or compressed data whose data size is greater than the data size threshold after data compression processing, or large field data in the first tuple existing when the tuple size of the first tuple is greater than the data size threshold after data compression processing.

In a possible implementation, an implementation process of storing the first data in the out-of-line data table is: performing slicing processing on the first data, to obtain at least one piece of slice data; and storing the at least one piece of slice data in the out-of-line data table.

Slicing processing may be performed on the first data in a slice size. The slice size is less than or equal to the data size threshold. For example, the slice size may be 1 KB, 2 KB, or the like. This is not limited in this embodiment of this application.

If the at least one piece of slice data includes first slice data and second slice data that are sequentially connected, an implementation process of storing the at least one piece of slice data in the out-of-line data table may be: storing the second slice data in a first physical area in the out-of-line data table; and storing the first slice data and a physical address of the first physical area in a second physical area in the out-of-line data table.

It should be noted that "sequentially connected" means that the first slice data is located before the second slice data in the first data. However, when data is stored in the out-of-line data table, in this embodiment of this application, in a "back-to-front" storage sequence, the second slice data is stored first, and then the first slice data is stored. In other words, a connection sequence of the first slice data and the second slice data is opposite to the storage sequence of the first slice data and the second slice data in the out-of-line data table.

In the out-of-line data table, each physical area corresponds to one physical address. A physical address of slice data that is stored first may be stored in a physical area in which slice data that is stored next is located. In this way, physical addresses of a plurality of pieces of slice data are concatenated, and a next piece of slice data may be continuously indexed based on a physical address stored in a physical area of one piece of slice data.

Optionally, when the first data is stored in the out-of-line data table, the first data itself may be stored, and data association information corresponding to the first data may also be stored in the second physical area in which the first slice data is located, for example, field data raw size (rawsize) and a field data size after compression (textsize). This is not limited in this embodiment of this application.

Step 603: Obtain a first storage address of the first data in the out-of-line data table.

Because the physical address of the first physical area is recorded in the second physical area, after the second physical area in which the first slice data is located is determined in the out-of-line data table, the physical address of the first physical area may be read from the physical area, to continue to read the second slice data from the first physical area.

Therefore, if the at least one piece of slice data of the first data stored in the out-of-line data table needs to be obtained, only a storage location of the first slice data in the first data in the out-of-line data table needs to be determined.

In a possible implementation, an implementation of step 603 may be: obtaining a physical address of the first slice data of the first data in the out-of-line data table, to obtain the first storage address. In other words, the first storage address is a data start address of the first data in the out-of-line data table.

Step 604: Store the first storage address in the first tuple of the main data table.

In other words, the data start address of the first data in the out-of-line data table is stored in the first tuple of the main data table.

For example, the at least one piece of slice data of the first data includes the first slice data and the second slice data that are sequentially connected. An implementation process of step 604 is: storing, in the first tuple of the main data table, a physical address of the second physical area that stores the first data slice.

It can be learned that, in this embodiment of this application, when the first tuple is stored in the database, if the first data in the first tuple meets the out-of-line storage condition, it is determined that the first data is large field data, the first data is stored in the out-of-line data table, and the data start address of the first data in the out-of-line data table is stored in the main data table. In this way, the main data table is directly associated with the out-of-line data table based on an out-of-line storage address of data. In a data management process, data stored in an out-of-line database may be directly managed based on the out-of-line storage address recorded in the main data table, so that data storage efficiency is improved in a high-concurrency data storage scenario.

Based on the foregoing step 601 to step 604, after a data storage operation on the first tuple is completed in the main data table and the out-of-line data table, at least one piece of large field data in the first tuple may be further updated based on the database. Based on this, as shown in FIG. 7, the data management method provided in this embodiment of this application further includes the following steps.

Step 605: Receive a data update request for the first tuple, where the data update request is used to request to update the first data based on the second data.

In a possible implementation, the data update request for the first tuple carries a tuple ID of the first tuple and update data of each field in the first tuple, to indicate to update the first tuple in the main data table based on the update data of each field. In other words, the entire first tuple is requested to be updated.

In this case, the first tuple may be updated based on data of each field after update; or in the main data table, one row of data may be regenerated in a manner of step 601 to step 604, to store the first tuple after update, and mark the first tuple before update for deletion.

In another possible implementation, the data update request carries a tuple ID of the first tuple, a field identifier of the first field, and the second data, to indicate to update the data of the first field in the first tuple based on the second data. In other words, data of a single field in the first tuple is requested to be updated.

In this case, the first data in the first tuple may be updated based on the second data. For example, the first storage address of the first data in the main data table is updated.

Information carried in the data update request is not limited in this embodiment of this application. The information may include data of all fields of the first tuple after update, or may include only data of at least one field that needs to be updated.

Step 606: If the second data meets the out-of-line storage condition, store the second data in the out-of-line data table, and obtain a second storage address of the second data in the out-of-line data table.

Because a data size of the second data may be greater than the data size threshold, or may be less than or equal to the data size threshold, before the first data is updated based on the second data, it needs to be first determined whether the second data can be directly stored in the main data table.

Refer to the foregoing descriptions. The out-of-line storage condition is that the data size is greater than the data size threshold. Therefore, when the data size of the second data is greater than the data size threshold, it indicates that the second data is large field data and cannot be directly stored in the main data table. In this case, the second data needs to be stored in the out-of-line manner. When the data size of the second data is less than or equal to the data size threshold, it indicates that the second data is data that can be normally stored in the database. In this case, the second data is directly stored in the main data table.

Similarly, the second storage address of the second data in the out-of-line data table is a data start address of the second data in the out-of-line data table. In other words, the second storage address is a physical address of a physical area, in the out-of-line data table, corresponding to the first slice data (that is, last slice data on which the out-of-line storage operation is performed) corresponding to the second data.

Step 607: Update the first storage address in the first tuple of the main data table to the second storage address.

When the second data meets the out-of-line storage condition, after the second storage address of the second data in the out-of-line data table is determined, the first storage address of the first data is deleted from a field position corresponding to the first data in the main data table, and the second storage address is written into the field position.

In some embodiments, if the second data does not meet the out-of-line storage condition, the first tuple in the main data table is updated based on the second data.

In other words, when the data size of the second data is less than the data size threshold, the second data may be directly stored in the main data table, and out-of-line storage is not required.

In a possible implementation, when the first tuple in the main data table is updated based on the second data, a second tuple may be added to the main data table based on the first tuple and the second data, where the second tuple includes the second data and has data same as that of another field in the first tuple; and the tuple including the first data is deleted from the main data table, to update the first tuple.

In another possible implementation, when the first tuple in the main data table is updated based on the second data, the first storage address of the first data may also be deleted, and the second data is written to a field position corresponding to the first data.

In some embodiments, when the first data in the first tuple does not meet the out-of-line storage condition and the first data is stored in the main data table, a process of updating the first data based on the second data is: If the data size of the second data is greater than the data size of the first data, the second data cannot directly update the first data at an original field position. In this case, a second tuple may be added to the main data table based on the first tuple and the second data, where the second tuple includes the second data and has data same as that of another field in the first tuple. The first tuple including the first data is deleted from the main data table, to update the first tuple. If the data size of the second data is less than or equal to the data size of the first data, the first data is directly updated (data coverage) based on the second data at the original field position, to update the first tuple.

In addition, when the first data is stored in the out-of-line data table, after the first tuple is updated in the main data table based on the second data, the first data further needs to be deleted from the out-of-line data table based on the first storage address of the first data stored in the main data table.

It can be learned that, in this embodiment of this application, when the second data is used to update the first data in the first tuple in the database, if the second data meets the out-of-line storage condition, the second data is stored in the out-of-line data table, and the first storage address of the first data is updated in the main data table by using the out-of-line storage address of the second data. In this way, the main data table is directly associated with the out-of-line data table based on an out-of-line storage address of data. In a data management process, data stored in an out-of-line database may be directly managed based on the out-of-line storage address recorded in the main data table, so that data storage efficiency is improved in a high-concurrency data storage scenario.

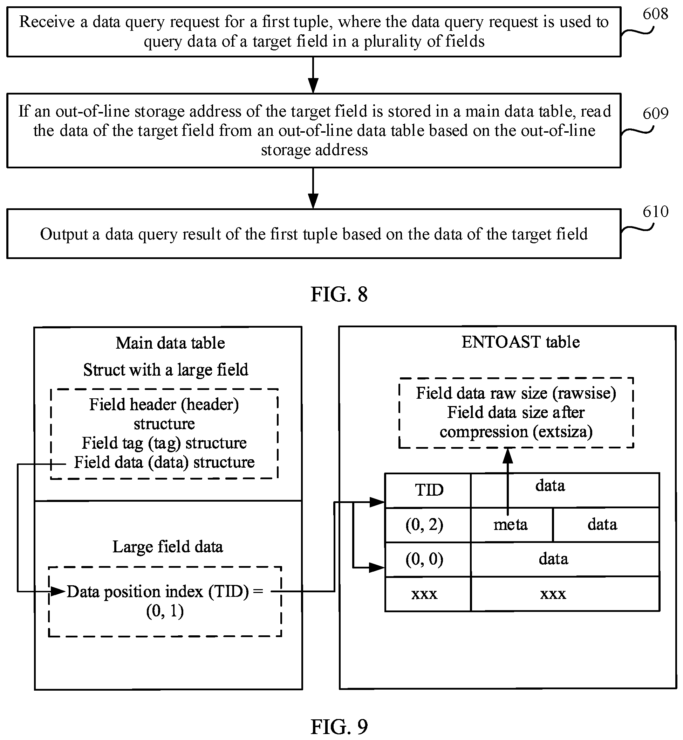

Based on the foregoing step 601 to step 604, after the first tuple is stored in the main data table, a data query request for at least one field in the first tuple may be further initiated based on the database, to obtain data of the at least one field in the first tuple from the database. Based on this, as shown in FIG. 8, the data management method provided in this embodiment of this application further includes the following steps.

Step 608: Receive a data query request for the first tuple, where the data query request is used to query data of a target field in the plurality of fields.

The target field may be a part of the fields in the first tuple, or may be all the fields in the first tuple. A quantity of target fields is not limited in this embodiment of this application.

Step 609: If an out-of-line storage address of the target field is stored in the main data table, read the data of the target field from the out-of-line data table based on the out-of-line storage address.

Refer to the foregoing descriptions. When data of a field is stored in the out-of-line data table, only an out-of-line storage address of the data is stored in a position of the field in the main data table. Therefore, when the out-of-line storage address of the target field is stored in the main data table, it indicates that the data of the target field is stored in the out-of-line data table, and the data of the target field needs to be obtained from the out-of-line data table based on the out-of-line storage address.

In a possible implementation, an implementation process of reading the data of the target field from the out-of-line data table based on the out-of-line storage address is: obtaining a 1^{st} piece of slice data from a corresponding physical area in the out-of-line data table based on the out-of-line storage address. If a physical address is also stored in the physical area indicated by the out-of-line storage address, a next piece of slice data is continuously read based on the physical address, and so on, until no physical address is stored in a physical area from which slice data is read. In this case, a plurality of pieces of slice data corresponding to the target field are obtained. If no physical address is stored in the physical area indicated by the out-of-line storage address, it indicates that no slicing processing is performed on the data of the target field during out-of-line storage. In this case, the 1^{st} piece of slice data is complete data of the target field.

Step 610: Output a data query result of the first tuple based on the data of the target field.

When the data of the target field includes the plurality of pieces of slice data, in a possible implementation, an implementation process of step 610 is: splicing the plurality of pieces of slice data in a reading sequence of the plurality of pieces of slice data; and outputting the query result of the first tuple based on data after splicing.

After the plurality of pieces of slice data are spliced, the complete data of the target field may be obtained. In this case, the query result of the first tuple may be output based on the complete data of the target field.

Optionally, the query result of the first tuple may include all data of the first tuple, or may include only the data of the target field in the first tuple. This is not limited in this embodiment of this application.

It can be learned that, in this embodiment of this application, when the data of the first tuple is queried in the database, if the data of the target field is stored in the out-of-line data table, after the out-of-line storage address of the target field is obtained from the main data table, the data of the target field is read from the out-of-line data table based on the out-of-line storage address, and the data query result of the first tuple is output. In this way, the main data table is directly associated with the out-of-line data table based on an out-of-line storage address of data. In a data management process, data stored in an out-of-line database may be directly managed based on the out-of-line storage address recorded in the main data table, so that data storage efficiency is improved in a high-concurrency data storage scenario.

In some embodiments, after a data deletion request for the first tuple is received, the data of each field in the first tuple may be first determined in the main data table and the out-of-line data table based on step 609, and then the first tuple is deleted from the main data table and the row data table.

To be specific, based on the foregoing embodiment, a tuple deletion operation may be split into a data query operation and a data deletion operation. After specific locations of the first tuple in the main data table and the out-of-line data table are determined, a deletion operation may be performed on the data of the corresponding first tuple. Details are not described herein in this embodiment of this application.

Based on the foregoing method embodiments, the following describes in detail a specific process of performing data management based on the ENTOAST technique in embodiments of this application with reference to FIG. 9 to FIG. 12.

The data management method in embodiments of this application relates to two data tables, namely, a main data table and an out-of-line data table (namely, an ENTOAST table) in a database. In the main data table, based on a struct with a target field, if field data of the target field is large field data greater than 2 KB, when the large field data is stored in the ENTOAST table, slicing processing is first performed on the large field data, to obtain at least one piece of slice data, then the slice data is sequentially stored in the ENTOAST table in a "back-to-front" storage sequence, and after a last piece of slice data is stored, a tuple identifier (TID) of the last piece of slice data in the ENTOAST table is stored in a corresponding tuple in the main data table.

In other words, an out-of-line storage address recorded in the main data table in this embodiment of this application is a TID (page ID, row ID) of the field data of the target field in the out-of-line data table.

In an example, as shown in FIG. 9, it is assumed that first slice data and second slice data that are sequentially connected are obtained by performing slicing processing on the large field data of the target field, and it is determined that a 1^{st} row and a 2^{nd} row of a page 0 of the ENTOAST table are idle positions. In this case, the second slice data is first stored in the 2^{nd} row, then the first slice data and a physical address (0, 2) of the 2^{nd} row are stored in the 1^{st} row, and a start address of the large field data in the out-of-line data table, that is, a physical address (0, 1) of the first slice data in the out-of-line data table, is returned to the main data table, so that an out-of-line storage address stored at a position of the target field in the main data table is (0, 1).

Optionally, when the large field data of the target field is stored in the ENTOAST table, data association information of the large field data may be further stored in a storage space of the first slice data, for example, a field data raw size (rawsize) and a field data size after compression (textsize). This is not limited in this embodiment of this application.

As shown in FIG. 9, in a storage area of the first slice data, a meta area stores the data association information of the large field data of the target field. In this way, after the last first slice data is obtained, the data association information of the target field may be determined.

In a data reading process, the first slice data is obtained from a 1^{st} row of a 0^{th} page in the ENTOAST table based on the out-of-line storage address TID=(0, 1) stored in the main data table, and then the second slice data is read from the 2^{nd} row of the page 0 based on the physical address (0, 2) stored in the 1^{st} row. Because a physical address stored in the 2^{nd} row is (0, 0), the second slice data stored in the 2^{nd} row is a last piece of slice data. In this way, based on the out-of-line storage address stored in the main data table, two pieces of slice data corresponding to the target field may be read from the ENTOAST table, and the two pieces of slice data may be spliced, to obtain complete data of the target field.

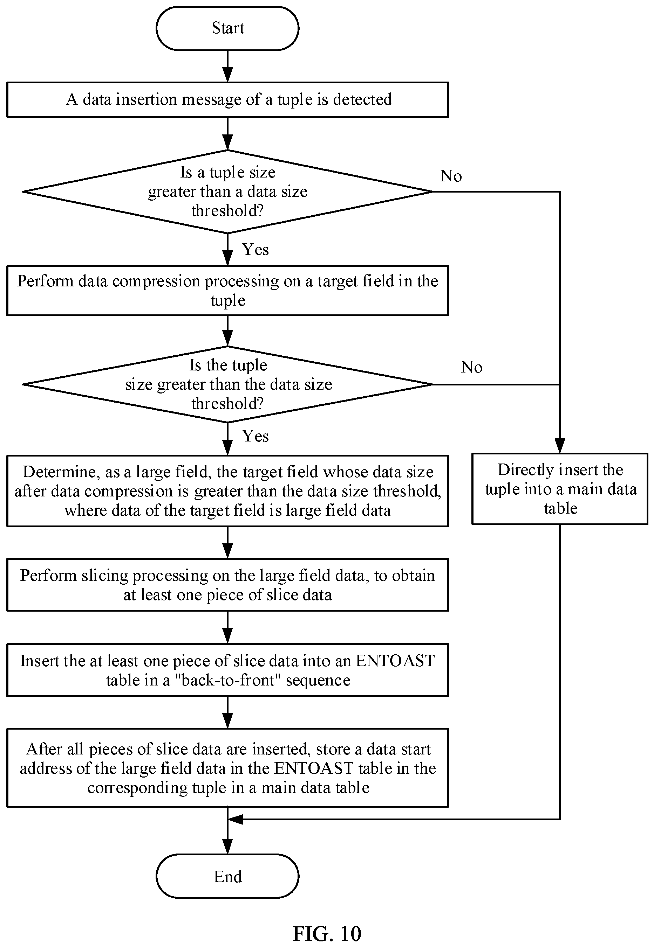

As shown in FIG. 10, a procedure for storing large field data based on an ENTOAST technique according to an embodiment of this application is: A data insertion message is listened to. If it is detected that a tuple needs to be stored in a database, whether a tuple size of the tuple is greater than a data size threshold is first determined. If the tuple size is less than or equal to the data size threshold, the tuple is directly inserted into a main data table; or if the tuple size is greater than the data size threshold, data compression processing is performed on a target field that supports compression in the tuple, and whether the tuple size of the tuple is greater than the data size threshold after data compression processing is determined. If the tuple size after data compression processing is less than or equal to the data size threshold, the tuple after data compression processing is directly inserted into the main data table; or if the tuple size after data compression processing is greater than the data size threshold, out-of-line storage is performed on large field data of the target field that is greater than the data size threshold after data compression processing.

During out-of-line storage, slicing processing is performed on the large field data, and at least one piece of slice data obtained after slicing processing is stored in an ENTOAST table. Physical addresses of physical areas of all the slice data are concatenated. When all the slice data of the large field data is stored in the ENTOAST table, a data start address (that is, a physical address of a piece of slice data stored last) of the large field data in an out-of-line data table is returned, the data start address is stored in the corresponding tuple in the main data table, and the data storage procedure ends.

Optionally, when slice data of target data is sequentially inserted into the ENTOAST table, in a process of traversing storage locations, tuple data marked as deletion on a traversed page may be deleted, and a physical space occupied by the tuple data is released.

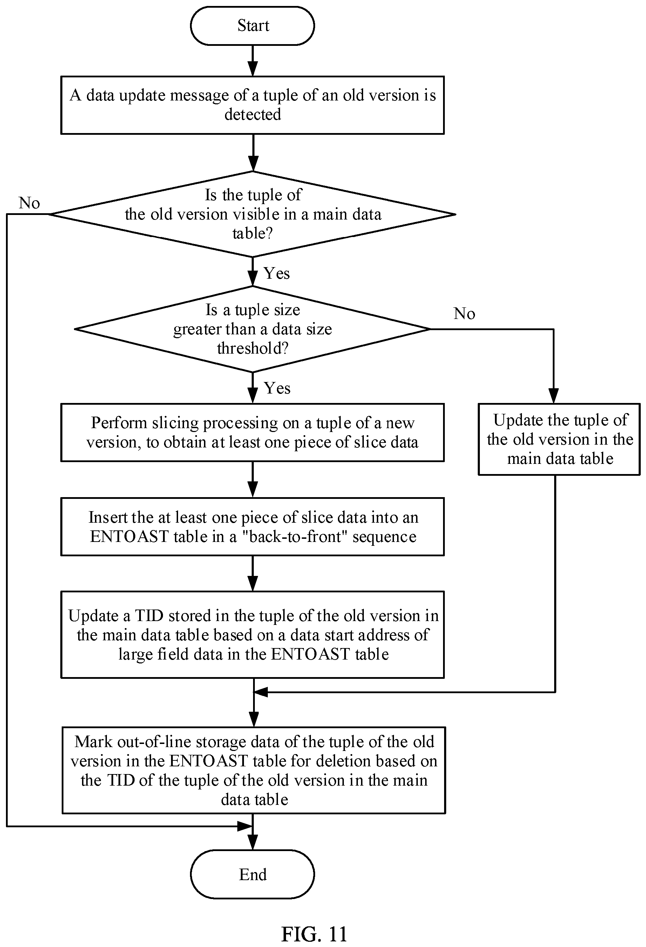

As shown in FIG. 11, a procedure of updating large field data based on an ENTOAST technique according to an embodiment of this application is: A data update message is listened to. If it is detected that a tuple of an old version in a database needs to be updated by using a tuple of a new version, visibility of the tuple of the old version in a main data table is first determined. If the tuple of the old version is visible, data in the tuple of the old version is updated based on the tuple of the new version; or if the tuple of the old version is invisible, it indicates that the tuple of the old version is not stored in the main data table, and the data update procedure directly ends.

When the tuple of the old version exists in the main data table, whether a tuple size of the tuple of the new version exceeds a data size threshold is determined. If the tuple size is less than or equal to the data size threshold, the tuple of the old version is directly updated by using the tuple of the new version; or if the tuple size of the tuple of the new version is greater than the data size threshold, slicing processing is performed on the tuple of the new version, and out-of-line storage is performed. Then, a TID stored in the tuple of the old version is updated in the main data table based on an out-of-line storage address.

Further, after an out-of-line storage address of the tuple of the new version is stored in the main data table, data corresponding to the TID needs to be marked as invalid in an out-of-line data table based on the TID of the tuple of the old version, and the data update procedure ends.

It should be understood that updating data of an entire tuple is merely used as an example herein. As described above, when the tuple is updated, data of all fields may be updated, or data of at least one field may be updated. Update logic of these is similar.

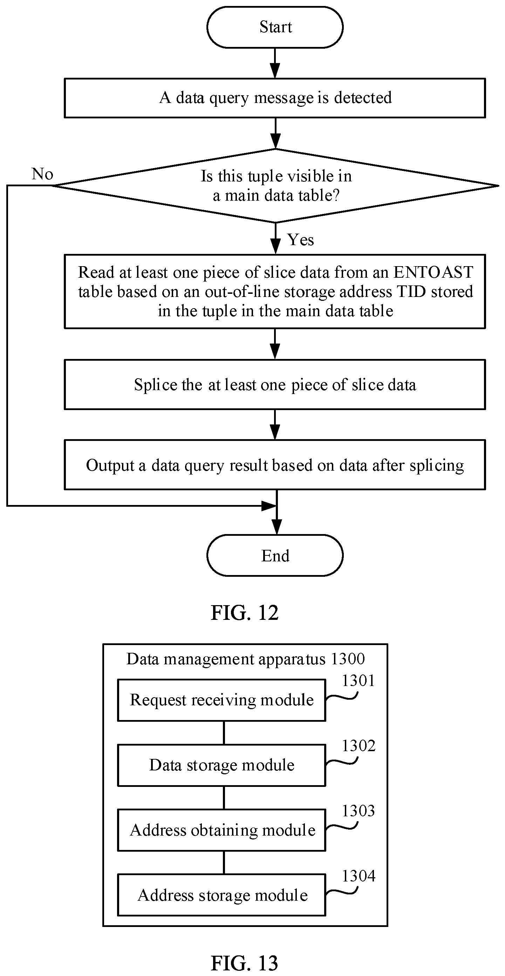

As shown in FIG. 12, a procedure of querying large field data based on an ENTOAST technique according to an embodiment of this application is: A data query request is listened to. If it is detected that data of a tuple needs to be queried in a database, whether the tuple is visible is first determined in a main database table. If the tuple is visible, data of the tuple is obtained based on the main data table and an out-of-line data table. If the tuple is invisible, it indicates that the tuple is not stored in the main data table, and the data query procedure ends.

When the tuple exists in the main data table, if a target field in the tuple has an out-of-line storage address TID, at least one piece of slice data is obtained from the out-of-line data table based on the out-of-line storage address TID, and then the at least one piece of slice data is spliced. A data query result of the tuple is output based on the data after splicing, and the data query procedure ends.

Optionally, when slice data of a target field is obtained from an ENTOAST table, tuple data marked as deletion on a traversed page may be deleted, and a physical space occupied by the tuple data is released.

It should be understood that querying data of an entire tuple is merely used as an example herein. As described above, when the tuple is queried, data of all fields may be obtained through querying, or data of at least one field may be queried. Query logic of these is similar.

In conclusion, according to the data management method provided in this embodiment of this application, a main data table is directly associated with an out-of-line data table based on an out-of-line storage address of data. In a data management process, for a field in a tuple, data stored in an out-of-line database may be directly managed based on the out-of-line storage address recorded in the main data table. This improves data management efficiency in a high-concurrency data management scenario.

FIG. 13 is a diagram of a structure of a data management apparatus according to an embodiment of this application. The data management apparatus may be implemented as a part or an entirety of a data node by using software, hardware, or a combination thereof. As shown in FIG. 13, the data management apparatus 1300 includes a request receiving module 1301, a data storage module 1302, an address obtaining module 1303, and an address storage module 1304.

The request receiving module 1301 is configured to receive a data storage request for a first tuple, where the first tuple includes data of a plurality of fields.

The data storage module 1302 is configured to: if first data meets an out-of-line storage condition, store the first data in an out-of-line data table, where the first data is data of any one of the plurality of fields.

The address obtaining module 1303 is configured to obtain a first storage address of the first data in the out-of-line data table.

The address storage module 1304 is configured to store the first storage address in the first tuple of a main data table.

Optionally, the data storage module 1302 includes:
a data slicing unit, configured to perform slicing processing on the first data, to obtain at least one piece of slice data; and
a data storage unit, configured to store the at least one piece of slice data in the out-of-line data table.

Optionally, the at least one piece of slice data includes first slice data and second slice data that are sequentially connected, and the data storage unit is specifically configured to:
store the second slice data in a first physical area in the out-of-line data table; and
store the first slice data and a physical address of the first physical area in a second physical area in the out-of-line data table; and
the address storage module 1303 is specifically configured to:
   store a physical address of the second physical area in the first tuple of the main data table.

Optionally, in the data management apparatus 1300,
the request receiving module 1301 is further configured to receive a data update request for the first tuple, where the data update request is used to request to update the first data based on second data;
the data storage module 1302 is further configured to: if the second data meets the out-of-line storage condition, store the second data in the out-of-line data table, and obtain a second storage address of the second data in the out-of-line data table; and
the address storage module 1303 is further configured to update the first storage address in the first tuple of the main data table to the second storage address.

Optionally, after receiving the data update request for the first tuple, the data management apparatus 1300 further includes:
a data update module, configured to: if the second data does not meet the out-of-line storage condition, update the first tuple in the main data table based on the second data.

Optionally, after updating the first tuple in the main data table, the data management apparatus 1300 further includes:
the data update module, further configured to delete the first data from the out-of-line data table based on the first storage address.

Optionally, the data management apparatus 1300 further includes:
the request receiving module, further configured to receive a data query request for the first tuple, where the data query request is used to query data of a target field in the plurality of fields;
a data reading module, configured to: if an out-of-line storage address of the target field is stored in the main data table, read the data of the target field from the out-of-line data table based on the out-of-line storage address; and
a result output module, further configured to output a data query result of the first tuple based on the data of the target field.

Optionally, the data of the target field includes a plurality of pieces of slice data, and the result output module includes:
a data splicing unit, configured to splice the plurality of pieces of slice data based on a reading sequence of the plurality of pieces of slice data; and
a result output unit, configured to output the query result of the first tuple based on data after splicing.

In this embodiment of this application, the data management apparatus directly associates a main data table with an out-of-line data table based on a storage address of data in the out-of-line data table. In a data management process, data in an out-of-line database may be directly managed based on the storage address recorded in the main data table. This improves data management efficiency in a high-concurrency data management scenario.

It should be noted that, when the data management apparatus provided in the foregoing embodiment manages data stored in the database, division into the foregoing functional modules is merely used as an example for description. In practice, the foregoing functions may be allocated to different functional modules and implemented based on a requirement. To be specific, an internal structure of the apparatus is divided into different functional modules to implement all or some of the functions described above. In addition, the data management apparatus provided in the foregoing embodiment is based on a same concept as embodiments of the data management method. For a specific implementation process, refer to the method embodiments, and details are not described herein again.

All or some of the foregoing embodiments may be implemented by software, hardware, firmware, or any combination thereof. When software is used to implement embodiments, all or a part of embodiments may be implemented in a form of computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A data management method, wherein the method comprises:
receiving a data storage request for a first tuple, wherein the first tuple comprises data of a plurality of fields;
if first data meets an out-of-line storage condition, storing the first data in an out-of-line data table, wherein the first data is data of any one of the plurality of fields;
obtaining a first storage address of the first data in the out-of-line data table; and
storing the first storage address in the first tuple of a main data table.

2. The method according to claim 1, wherein storing the first data in the out-of-line data table comprises:
performing slicing processing on the first data, to obtain at least one piece of slice data; and
storing the at least one piece of slice data in the out-of-line data table.

3. The method according to claim 2, wherein the at least one piece of slice data comprises first slice data and second slice data that are sequentially connected, and storing the at least one piece of slice data in the out-of-line data table comprises:
storing the second slice data in a first physical area in the out-of-line data table; and
storing the first slice data and a physical address of the first physical area in a second physical area in the out-of-line data table; and
storing the first storage address in the first tuple of the main data table comprises:
storing a physical address of the second physical area in the first tuple of the main data table.

4. The method according to any one of claims 1 to 3, wherein the method further comprises:
receiving a data update request for the first tuple, wherein the data update request is used to request to update the first data based on second data;
if the second data meets the out-of-line storage condition, storing the second data in the out-of-line data table, and obtaining a second storage address of the second data in the out-of-line data table; and
updating the first storage address in the first tuple of the main data table to the second storage address.

5. The method according to any one of claims 1 to 3, wherein after the receiving a data update request for the first tuple, the method further comprises:
if the second data does not meet the out-of-line storage condition, updating the first tuple in the main data table based on the second data.

6. The method according to claim 4 or 5, wherein after updating the first tuple in the main data table, the method further comprises:
deleting the first data from the out-of-line data table based on the first storage address.

7. The method according to any one of claims 1 to 6, wherein the method further comprises:
receiving a data query request for the first tuple, wherein the data query request is used to query data of a target field in the plurality of fields;
if an out-of-line storage address of the target field is stored in the main data table, reading the data of the target field from the out-of-line data table based on the out-of-line storage address; and
outputting a data query result of the first tuple based on the data of the target field.

8. The method according to claim 7, wherein the data of the target field comprises a plurality of pieces of slice data, and outputting the data query result of the first tuple based on the data of the target field comprises:
splicing the plurality of pieces of slice data based on a reading sequence of the plurality of pieces of slice data; and
outputting the query result of the first tuple based on data after splicing.

9. A data management apparatus, wherein the apparatus comprises:
a request receiving module, configured to receive a data storage request for a first tuple, wherein the first tuple comprises data of a plurality of fields;
a data storage module, configured to: if first data meets an out-of-line storage condition, store the first data in an out-of-line data table, wherein the first data is data of any one of the plurality of fields;
an address obtaining module, configured to obtain a first storage address of the first data in the out-of-line data table; and
an address storage module, configured to store the first storage address in the first tuple of a main data table.

10. The apparatus according to claim 9, wherein the data storage module comprises:
a data slicing unit, configured to perform slicing processing on the first data, to obtain at least one piece of slice data; and
a data storage unit, configured to store the at least one piece of slice data in the out-of-line data table.

11. The apparatus according to claim 10, wherein the at least one piece of slice data comprises first slice data and second slice data that are sequentially connected, and the data storage unit is specifically configured to:
store the second slice data in a first physical area in the out-of-line data table; and
store the first slice data and a physical address of the first physical area in a second physical area in the out-of-line data table; and
the address storage module is specifically configured to:
store a physical address of the second physical area in the first tuple of the main data table.

12. The apparatus according to any one of claims 9 to 11, wherein the apparatus comprises:
the request receiving module, further configured to receive a data update request for the first tuple, wherein the data update request is used to request to update the first data based on second data;
the data storage module, further configured to: if the second data meets the out-of-line storage condition, store the second data in the out-of-line data table, and obtain a second storage address of the second data in the out-of-line data table; and
the address storage module, further configured to update the first storage address in the first tuple of the main data table to the second storage address.

13. The apparatus according to any one of claims 9 to 11, wherein the apparatus further comprises:
a data update module, configured to: if the second data does not meet the out-of-line storage condition, update the first tuple in the main data table based on the second data.

14. The apparatus according to claim 12 or 13, wherein the apparatus further comprises:
the data update module, further configured to delete the first data from the out-of-line data table based on the first storage address.

15. The apparatus according to any one of claims 9 to 14, wherein the apparatus further comprises:
the request receiving module, further configured to receive a data query request for the first tuple, wherein the data query request is used to query data of a target field in the plurality of fields;
a data reading module, configured to: if an out-of-line storage address of the target field is stored in the main data table, read the data of the target field from the out-of-line data table based on the out-of-line storage address; and
a result output module, further configured to output a data query result of the first tuple based on the data of the target field.

16. The apparatus according to claim 15, wherein the data of the target field comprises a plurality of pieces of slice data, and the result output module comprises:
a data splicing unit, configured to splice the plurality of pieces of slice data based on a reading sequence of the plurality of pieces of slice data; and
a result output unit, configured to output the query result of the first tuple based on data after splicing.

17. A computer device, wherein the computer device comprises a memory and a processor;
the memory is configured to store a computer program; and
the processor is configured to execute the computer program to implement the data management method according to any one of claims 1 to 8.

18. A computer-readable storage medium, wherein the storage medium stores a computer program; and when the computer program is executed by a processor, the data management method according to any one of claims 1 to 8 is implemented.

19. A computer program product, wherein the computer program product stores computer instructions, and when the computer instructions are executed by a processor, the data management method according to any one of claims 1 to 8 is implemented.
